# EUROPÄISCHE PATENTSCHRIFT

(11) **EP 0 288 770 B1**
(45) Veröffentlichungstag und Bekanntmachung des Hinweises auf die Patenterteilung: **02.06.1993**
(21) Anmeldenummer: 88105159.3
(22) Anmeldetag: 30.03.1988
(51) Int. Cl.: B60H 1/28, B60S 1/04

(54) **Kraftfahrzeug**
Automotive vehicle
Véhicule automobile

(30) Priorität: 18.04.1987 DE 3713217
(43) Veröffentlichungstag der Anmeldung: 02.11.1988
(73) Patentinhaber: Bayerische Motoren Werke Aktiengesellschaft, 80788 München (DE)
(72) Erfinder: Schlaudraff, Ernst, D-8000 München 60 (DE); Seitz, Hans, D-8060 Dachau (DE)

(56) Entgegenhaltungen:
- DE-A- 3 132 431
- DE-A- 3 409 051
- US-A- 3 421 174
- US-A- 3 738 252

## Beschreibung

Die Erfindung bezieht sich auf eine Vorrichtung der im Oberbegriff des ersten Anspruchs angegebenen Art.

Aus der DE-OS 34 09 051 ist ein gattungsbildendes Kraftfahrzeug bekannt. Hierbei wird ein zusätzlicher Wärmetauscher vorgesehen, der erwärmte Luft zu unterhalb der Windschutzscheibe befindlichen Austrittsöffnungen leitet. Diese Austrittsöffnungen sind derart gerichtet, daß der warme Luftstrom über die Wischerblätter streicht, wenn sie sich in Ruhestellung befinden. Damit soll die Funktionsfähigkeit der Scheibenwischer und der Scheibenreinigungsanlage ganz allgemein im Winterbetrieb sichergestellt werden.

Diese Lösung ist aufwendig, da sie in der Motorhaube des Fahrzeuges besondere Luftleitvorrichtungen verlangt. Daneben ist bei höheren Geschwindigkeiten nicht sichergestellt, daß der erwärmte Luftstrom tatsächlich die Scheibenwischer erreicht und nicht durch den Fahrtwind abgelenkt wird.

Darüber hinaus besteht ganz allgemein ein Problem bei Kraftfahrzeugen darin, daß die Lufteintrittsöffnungen zur Zufuhr der Frischluft in den Fahrzeuginnenraum im Winterbetrieb von Shnee und/oder Eis zugesetzt werden. Begünstigt wird dies durch engmaschige Grills, die den ... Eintritt von groben Schmutzpartikeln wie Laub, kleine Äste etc. abhalten sollen.

Unterstützt wird das Zusetzen der Lufteintrittsöffnungen durch Schnee und/oder Eis auch durch die heutige Form der Kraftfahrzeughauben. Aufgrund aerodynamischer Erfordernisse sind die der Windschutzscheibe zugewandten Enden üblicherweise hochgezogen, um eine verdeckte Ablage der Scheibenwischer zu gewährleisten. Damit sinkt auch der untere Scheibenrand unter die Abschlußkante der Fronthaube, so daß die unterhalb der Frontscheibe angeordneten Lufteintrittsöffnungen praktisch in einem Kanal liegen.

Bei derartigen Kraftfahrzeugen wird dann insbesondere sehr nasser Schnee von den Scheibenwischern in diesen Kanal gefördert und verstopft die Lufteintrittsöffnungen. Hierbei entsteht dann das Problem, daß nicht genügend Frischluft angesaugt werden kann, um den Fahrzeuginnenraum zu erwärmen. Damit ist auch nicht mehr gewährleistet, daß die Frontscheibe von innen beschlagfrei gehalten wird, so daß die freie Sicht des Fahrers in unzulässiger Weise behindert wird.

Aufgabe der vorliegenden Erfindung ist es, bei einem Kraftfahrzeug der eingangs genannten Art einen Weg aufzuweisen, wie die Lufteintrittsöffnungen zum Frischlufteintritt in den Fahrzeuginnenraum sicher und einfach von Schnee und/oder Eis freigehalten werden können.

Diese Aufgabe wird erfindungsgemäß durch die kennzeichnenden Merkmale des ersten Anspruchs gelöst. Nach der Erfindung wird also der Wärmetauscher im Grill der Eintrittsöffnungen integriert. Damit ist sichergestellt, daß diese Eintrittsöffnungen freibleiben. Dies geschieht unabhängig von der Fahrzeuggeschwindigkeit, weil - im Gegensatz zum gattungsbildenden Stand der Technik - kein erwärmter Luftstrom abgelenkt werden kann. Damit wird auch zuverlässig sichergestellt, daß von den Scheibenwischern den Lufteintrittsöffnungen vorgelagerter Schnee von der Windschutzscheibe sicher abgetaut wird und durch die üblichen Wasserablauföffnungen abfließen kann. Somit ist auch bei starkem Schneefall eine ausreichende Luftzufuhr zum Fahrzeuginnenraum gewährleistet, so daß die Fahrzeuginnenraumheizung optimal arbeiten kann.

Aus der US-A 3,738,252 ist ein rohrförmiger, in einem schmalen Windlauf angeordneter Wärmetauscher bekannt, der den Windlauf und auch die in Ruhestellung am unteren Windschutzscheibenrand befindlichen Scheibenwischer von Schnee und Eis freihält. Lufteintrittsöffnungen in diesem Bereich sind hier nicht bekannt.

Durch die kennzeichnenden Merkmale des Anspruchs 2 wird ein einfach aufgebauter Wärmetauscher erzielt, der wenig Platz einnimmt. Hierdurch können auch die Arme des Scheibenwischers und ihre Gelenke erwärmt werden, so daß ein Festfrieren der Scheibenwischerarme ausgeschlossen ist. Es ist selbstverständlich auch möglich, Plattenwärmetauscher zu verwenden.

Durch die Weiterbildung nach den kennzeichnenden Merkmalen des Anspruchs 3 wird eine einfache Befestigung der Rohre des Wärmetauschers erzielt. Es ist auch denkbar, die einzelnen Lamellen als Platten eines Plattenwärmetauschers aufzubauen. Dies ist jedoch eine bautechnisch aufwendigere Lösung als ein Rohrwärmetauscher.

Durch die Weiterbildung der Erfindung nach den Merkmalen des Anspruchs 4 wird verhindert, daß die Scheibenwischer in ihrer Ruhestellung zum einen an der Scheibe festfrieren und zum anderen durch angesammelten Schnee sich zusetzen, so daß die Elastizität der Scheibenwischergummis sich verringert.

Wird eine flüssigkeitsgekühlte Brennkraftmaschine zum Antrieb des Kraftfahrzeugs verwendet, so bietet sich die Weiterbildung der Erfindung nach Anspruch 5 an. Der Wärmetauscher kann jedoch auch mit Schmiermittel der Brennkraftmaschine beschickt werden.

Durch die Weiterbildung nach Anspruch 6 wird erreicht, daß der Wärmetauscher nur dann eingeschaltet wird, wenn er auch benötigt wird. Dies kann beispielsweise durch einen Außentemperaturfühler über eine entsprechende Regeleinrichtung mit einem Steuerventil bewerkstelligt werden.

Durch die Weiterbildung der Erfindung nach Anspruch 7 wird verhindert, daß der Wärmetauscher zu heiß wird, so daß ein sicherer Schutz vor Verbrennungen an den freiliegenden Teilen erzielt wird. Dadurch ist auch sichergestellt, daß bei einem Abstellen des Fahrzeugs und Öffnen der Fronthaube der Fahrer sich an dem Wärmetauscher verbrennen kann.

Im folgenden wird die Erfindung anhand eines bevorzugten Ausführungsbeispiels näher beschrieben. Es stellen dar:
- Fig. 1: eine Draufsicht auf ein Kraftfahrzeug mit aufgeschnittener Fronthaube;
- Fig. 2: eine Schnittansicht nach Fig. 1.

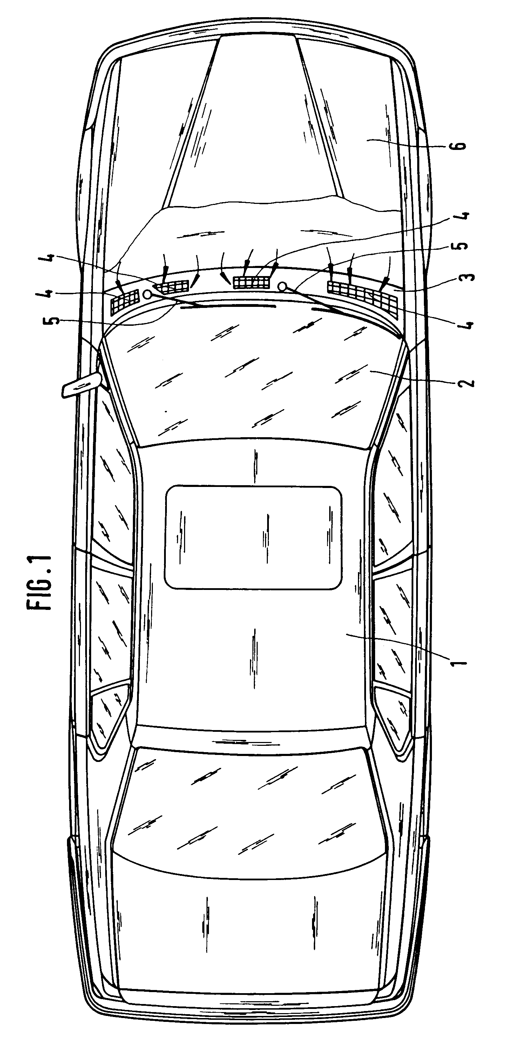

In Fig. 1 ist eine Draufsicht auf ein Fahrzeug 1 mit aufgeschnittener Fronthaube und ohne Einbauten im Motorraum dargestellt. Wie eindeutig aus dieser Abbildung ersichtlich, befindet sich unterhalb der Windschutzscheibe 2 im sog. Windlauf 3 eine Mehrzahl von Lufteintrittsöffnungen 4, die Frischluft in das Fahrzeuginnere leiten. Üblicherweise wird hierzu eine Heiz-und/oder Klimaanlage verwendet, die ein Gebläse enthält, welches die Luft ansaugt und im Fahrzeuginnenraum über entsprechende Austrittsöffnungen verteilt. Weiterhin ist in dem Windlauf 3 die Lagerung der Scheibenwischerarme 5 in an sich bekannter Weise vorgesehen. Die Fronthaube 6 ist im Bereich der Windschutzscheibe 2 geschnitten dargestellt.

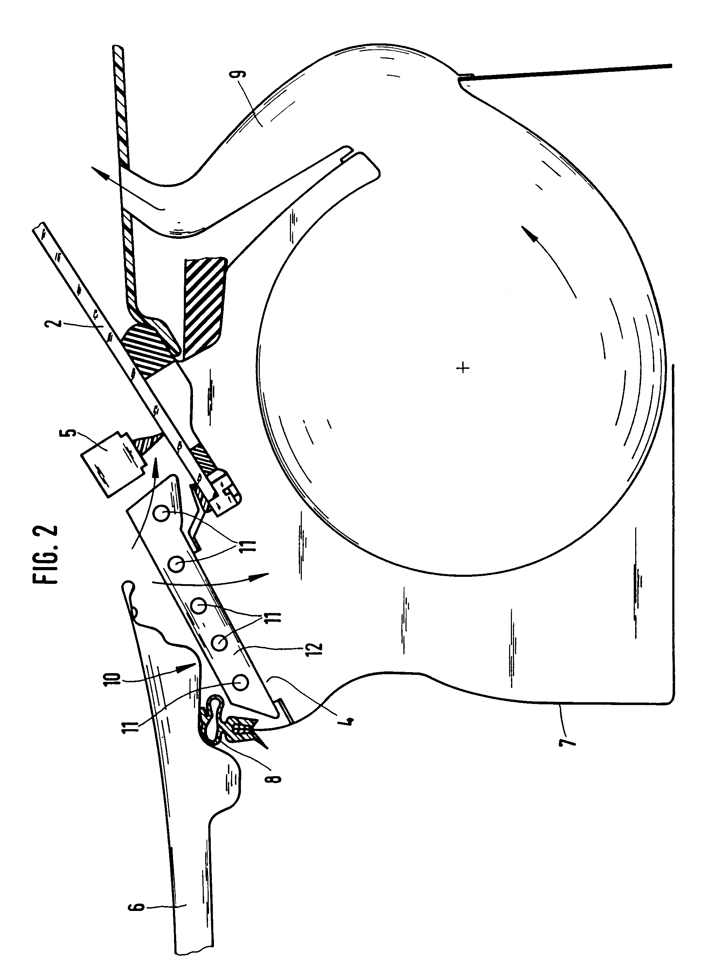

In Fig. 2 ist ein Querschnitt durch die nach Fig. 1 dargestellte Anordnung. Die Fronthaube 6 überdeckt die Lufteintrittsöffnungen 4. Darüber hinaus ist - was in Fig. 1 aus Gründen der Übersichtlichkeit weggelassen ist - die Stirnwand 7 der Heizungsabschlußwand hochgezogen bis zur Innenseite der Fronthaube 6. Zwischen der Fronthaube 6 und der Stirnwand 7 befindet sich eine umlaufende Dichtung 8. Dadurch ist sichergestellt, daß der Motorraum von den Lufteintrittsöffnungen 4 abgeschirmt ist, so daß keine Luftzufuhr aus dem Motorraum stattfinden kann.

Wie Fig. 2 zu entnehmen ist, sind die Lufteintrittsöffnungen 4 an und für sich vor Schnee geschützt. Aufgrund der Lage der Scheibenwischer 5 wird jedoch gerade nasser Schnee von den Scheibenwischern von der Windschutzscheibe vor die Lufteintrittsöffnungen 4 geschoben. Auch wird sich beim Reinigen von Hand der Windschutzscheibe von Eis und Schnee nicht vermeiden lassen, daß sich hierbei die Lufteintrittsöffnungen 4 zusetzen. Da an dieser Stelle kein Fahrtwind eintreten kann, bleibt der Schnee dort liegen. Dadurch verstopft er die Lufteintrittsöffnungen 4, so daß die Heiz- und oder Klimaanlage 9 keine Frischluftzufuhr erhält, so daß die Temperierung des Fahrzeuginnenraumes nur äußerst zögerlich oder gar nicht möglich ist.

Aus diesem Grunde ist erfindungsgemäß ein Wärmetauscher 10 in diesem Bereich, d.h. direkt über den Lufteintrittsöffnungen 4 angeordnet. Er besteht aus den Wasserrohren 11, die an den Kühlkreislauf der Brennkraftmaschine angeschlossen sind. Gehalten werden diese Wasserrohre 11 in den in ihrer Höhe verlängerten Lamellen 12 des die Lufteintrittsöffnungen nach außen begrenzenden Grills. Je nach Platzverhältnissen ist es auch möglich, die Lamellen 12 nach innen, d.h. in Richtung der Frischluftströmung zu verlängern und dort die Wasserrohre des Wärmetauschers anzuordnen. Bei dieser Ausführungsform wird jedoch der von den Scheibenwischern über die Lufteintrittsöffnungen geschaufelte Schnee nicht so schnell abgetaut; es sei denn, die Lamellen werden auch nach außen in ihrer Höhe verlängert und bilden dadurch für den Schnee Teilwände, so daß einzelne Rillen entstehen, in denen der Schnee schnell abgetaut werden kann.

Werden diese Lamellen 12 auch in ihrer Länge verlängert, und zwar derart, daß sie bis nahe an die in Ruhestellung befindlichen Scheibenwischer 5 heranreichen, so können hierdurch auch die Wischerarmgelenke sowie das Scheibenwischergummi selbst erwärmt werden, und zwar ohne direkten Kontakt mit dem Scheibenwischergummi.

Der aufgetaute Schnee wird dann aus den Lufteintrittsöffnungen in üblicher Weise über Wasserableitkanäle 13 zur Straße abgeleitet.

Der erfindungsgemäße Wärmetauscher ist vorteilhafterweise temperaturabhängig mit dem Kühlkreislauf der Brennkraftmaschine verbindbar. Dadurch wird erreicht, daß er nur bei Temperaturen, bei denen Schneefall eintreten kann, in Betrieb genommen wird. Es ist dann nur noch erforderlich, daß er bei tatsächlich einsetzenden Schneefall dann vom Fahrer eingeschaltet wird. Jedoch kann der Wärmetauscher auch temperaturabhängig prophylaktisch eingeschaltet werden. Dies hat den Vorteil, daß der Fahrer das Einschalten nicht vergißt oder erst dann vornimmt, wenn die Luftzufuhr im Fahrzeuginnenraum spürbar geringer wird. Auch ist es vorteilhaft, den Kühlmitteldurchfluß bei Betrieb des Wärmetauschers so zu steuern, daß nur relativ geringe Bauteiltemperaturen, also beispielsweise 10°C - 20°C sich einstellen. Dies ist zum einen vollkommen ausreichend um den Schnee schnell und sicher abzutauen und bietet zum anderen den Vorteil, daß keine Verbrennungsgefahr der umliegenden Bauteile oder bei geöffneter Haube und abgestelltem Fahrzeug für den Fahrer oder den Monteur eintritt. Darüber hinaus hat diese Anordnung den Vorteil, daß der Fahrzeugheizungs- und/oder Klimaanlage vorgewärmte Frischluft zugeführt wird, die den Heizungswärmetauscher noch unterstützt, so daß schneller die gewünschte Innenraumtemperatur erreicht wird.

## Patentansprüche

1. Kraftfahrzeug mit unterhalb der Frontscheibe (2) angeordneten Lufteintrittsöffnungen (4) zur Frischluftzufuhr in den Fahrzeuginnenraum, die von einem Grill abgedeckt sind, und mit Scheibenwischern (5), die in ihrer Ruhestellung oberhalb der Lufteintrittsöffnungen (4) im Bereich der Scheibenunterkante liegen,
dadurch gekennzeichnet, daß im Grill der Lufteintrittsöffnungen (4) ein Wärmetauscher (10) angeordnet ist.

2. Kraftfahrzeug nach Anspruch 1,
dadurch gekennzeichnet, daß der Wärmetauscher (10) als sich zumindest über die gesamte Breite der Lufteintrittsöffnungen (4) erstreckender Rohrwärmetauscher ausgebildet ist.

3. Kraftfahrzeug nach Anspruch 1 oder 2
dadurch gekennzeichnet, daß die einzelnen Lamellen (12) des Grills in ihrer Höhe verlängert sind und die Rohre (11) des Wärmetauschers (10) tragen. (Hieran schließen sich die Ansprüche 4 bis 7 unverändert an.)

4. Kraftfahrzeug nach einem der vorangegangenen Ansprüche,
dadurch gekennzeichnet, daß die Lamellen (12) bis in die Nähe der in Ruhestellung befindlichen Scheibenwischer (5) verlängert sind.

5. Kraftfahrzeug nach einem der vorangegangenen Ansprüche wobei das Kraftfahrzeug von einer flüssigkeitsgekühlten Brennkraftmaschine angetrieben wird,
dadurch gekennzeichnet, daß der Wärmetauscher (10) an den Kühlkreislauf der Brennkraftmaschine angeschlossen ist.

6. Kraftfahrzeug nach Anspruch 5,
dadurch gekennzeichnet, daß der Wärmetauscher (10) temperaturabhängig mit dem Kühlkreislauf der Brennkraftmaschine gekoppelt bzw. abgetrennt ist.

7. Kraftfahrzeug nach Anspruch 5 oder 6,
dadurch gekennzeichnet, daß der Flüssigkeitsdurchsatz durch den Wärmetauscher (10) regelbar ist.

## Claims

1. A motor vehicle with air inlet openings (4) which are arranged beneath the front windscreen (2) for the supply of fresh air into the interior of the vehicle and which are covered by a grill, and with windscreen wipers (5) which, in their positions of rest, lie above the air inlet openings (4) in the region of the lower edge of the windscreen,characterised in that a heat exchanger (10) is arranged in the grill of the air inlet openings (4).

2. A motor vehicle according to Claim 1,
characterised in that the heat exchanger (10) is constructed as a tubular heat exchanger extending at least over the entire width of the air inlet openings (4).

3. A motor vehicle according to Claim 1 or 2,
characterised in that the individual sheets (12) of the grill are extended in height and carry the pipes (11) of the heat exchanger (10).

4. A motor vehicle according to one of the preceding claims,
characterised in that the sheets (12) are extended into the vicinity of the windscreen wipers (5) which are in their positions of rest.

5. A motor vehicle according to any one of the preceding claims in which the motor vehicle is driven by a liquid-cooled internal-combustion engine,
characterised in that the heat exchanger (10) is connected to the coolant circuit of the internal-combustion engine.

6. A motor vehicle according to Claim 5,
characterised in that the heat exchanger (10) is coupled with or separated from respectively the coolant circuit of the internal-combustion engine as a function of the temperature.

7. A motor vehicle according to Claim 5 or 6,
characterised in that the through-flow of liquid throughthe heat exchanger (10) is regulable.

## Revendications

1. Véhicule automobile avec des ouvertures d'entrée d'air (4) disposées au-dessous du pare brise (2) pour amener de l'air frais dans l'espace interne du véhicule, et qui sont recouvertes par un grillage, et avec des essuie-glaces (5) qui dans leur position de repos, sont placés au-dessus des ouvertures d'entrée d'air (4) au voisinage du bord inférieur de la glace, véhicule automobile caractérisé en ce qu'un échangeur thermique (10) est disposé sur le grillage des ouvertures d'entrée d'air (4).

2. Véhicule automobile selon la revendication 1, caractérisé en ce que l'échangeur thermique (10) est réalisé sous la forme d'un échangeur thermique à tube s'étendant au moins sur la largeur totale des ouvertures d'entrée d'air (4).

3. Véhicule automobile selon la revendication 1 ou la revendication 2, caractérisé en ce que les différentes lamelles (12) du grillage sont prolongées en hauteur et portent les tubes (11) de l'échangeur thermique (10).

4. Véhicule automobile selon une des précédentes revendications, caractérisé en ce que les lamelles (12) sont prolongées jusqu'au voisinage de l'essuie-glace (5) se trouvant dans sa position de repos.

5. Véhicule automobile selon une des précédentes revendications, et qui est entraîné par un moteur à combustion interne refroidi par un liquide, véhicule automobile caractérisé en ce que l'échangeur thermique (10) est raccordé au circuit de refroidissement du moteur à combustion interne.

6. Véhicule automobile selon la revendication 5, caractérisé en ce que l'échangeur thermique (10) est couplé au circuit de refroidissement du moteur à combustion interne, ou bien découpé de celui-ci en fonction de la température.

7. Véhicule automobile selon la revendication 5 ou la revendication 6, caractérisé en ce que le débit du liquide est susceptible d'être réglé par l'échangeur thermique (10).
